# FASCICULE DE BREVET EUROPEEN

(11) **EP 2 181 005 B1**
(45) Date de publication et mention de la délivrance du brevet: **04.05.2011**
(21) Numéro de dépôt: 08806087.6
(22) Date de dépôt: 25.06.2008
(51) Int. Cl.: B60G 15/06

(54) **BUTEE TOURNANTE AMELIOREE D'UN TRAIN AVANT DE VEHICULE AUTOMOBILE**
VERBESSERTES DREHBARES WIDERLAGER FÜR DIE VORDERACHSE EINES AUTOMOBILS
IMPROVED ROTARY ABUTMENT FOR THE FRONT AXLE OF AN AUTOMOBILE

(30) Priorité: 29.08.2007 FR 0706050
(43) Date de publication de la demande: 05.05.2010
(73) Titulaire: Renault S.A.S., 92100 Boulogne-Billancourt (FR)
(72) Inventeur: DUPONT, Radjou, F-78000 Versailles (FR)
(86) Numéro de dépôt international: PCT/FR2008/051158
(87) Numéro de publication internationale: WO 2009/030843

(56) Documents cités:
- EP-A- 1 170 157
- DE-A1- 19 809 074
- FR-A- 2 145 082

## Description

La présente invention concerne une butée tournante améliorée d'un train avant d'un véhicule automobile.

L'invention concerne également un train avant de véhicule automobile comportant la butée tournante améliorée ci-dessus.

L'état de la techniqué comme exposé dans le document DE 19809074 A1 le plus proche de l'invention est constitué par une butée tournante d'un train avant de véhicule automobile comprenant un premier élément annulaire fixe destiné à venir en appui contre un bloc filtrant (caoutchouc) s'appuyant sous une partie fixe de la carrosserie du véhicule et un second élément annulaire mobile en rotation par rapport au premier élément, ce second élément entourant et portant l'extrémité supérieure d'un ressort d'une jambe de force du train avant et supportant l'effort exercé par ce ressort de suspension entourant la jambe de force, un roulement à billes ou analogue étant intercalé entre les deux éléments annulaires, ces deux éléments étant réalisés en matière plastique.

Le second élément de la butée est soumis à l'effort exercé par le ressort de compression qui est transmis au premier élément au moyen des billes du roulement à billes.

Dans la réalisation connue ci-dessus la totalité de la surface supérieure du premier élément de la butée est en contact avec le bloc filtrant en caoutchouc dont le rôle est de filtrer les vibrations.

Par ailleurs, dans ce type de butée tournante, il existe un jeu entre les deux éléments, de sorte que le roulement à billes n'est pas situé dans un milieu étanche et est donc exposé à l'humidité et à la corrosion, aux intrusions d'eau, de boue et d'impuretés.

Pour protéger davantage le roulement à billes à l'égard de la corrosion et des intrusions d'eau, de boue et d'impuretés, la périphérie des deux éléments annulaires de la butée tournante comporte des chicanes.

L'expérience a montré que les deux éléments de la butée notamment en raison de leur diamètre relativement important travaillaient dans des conditions défavorables, se traduisant par des déformations de la matière plastique de ces éléments (aux extrémités).

Ces déformations engendrent des modifications du jeu périphérique compris entre les deux éléments causant des défauts d'étanchéité, une corrosion et une dégradation de la performance des billes sur la piste de roulement comprise entre les deux éléments de la butée.

Le but de la présente invention est de remédier à cet inconvénient.

Ce but est atteint selon l'invention, grâce au fait que la surface du premier élément annulaire destinée à venir en appui contre le bloc filtrant comporte un décrochement pour définir un jeu à la périphérie de ladite surface du premier élément et la surface adjacente du bloc filtrant.

Ainsi, grâce à ce décrochement, un jeu existe sur le pourtour du premier élément annulaire et le bloc filtrant en caoutchouc.

De ce fait, la partie périphérique du premier élément est libre par rapport au bloc filtrant et ne subit pas de contraintes engendrées par la déformation du bloc filtrant.

De préférence, ledit décrochement est annulaire et est centré sur l'axe de rotation.

Selon une particularité avantageuse de l'invention, ledit décrochement est situé sensiblement au droit des billes dudit roulement à billes.

Ainsi, toute la partie périphérique du premier élément annulaire située à l'extérieur du roulement à billes est libre de tout contact avec le bloc filtrant et ne subit pas de contraintes dues à la déformation de ce bloc.

Avantageusement, le jeu défini par ledit décrochement est de l'ordre de quelques millimètres.

De préférence, les éléments annulaires de la butée selon l'invention sont en polyamide et le bloc filtrant est en élastomère, par exemple en caoutchouc.

D'autres particularités et avantages de la présente invention apparaîtront encore tout au long de la description ci-après.

L'invention est maintenant décrite en référence aux dessins annexés, non limitatifs, dans lesquels :
- la figure 1 est une vue en coupe selon un plan axial d'une butée tournante selon l'état de la technique,
- la figure 2 est une vue analogue à la figure 1 montrant une butée tournante selon l'invention.

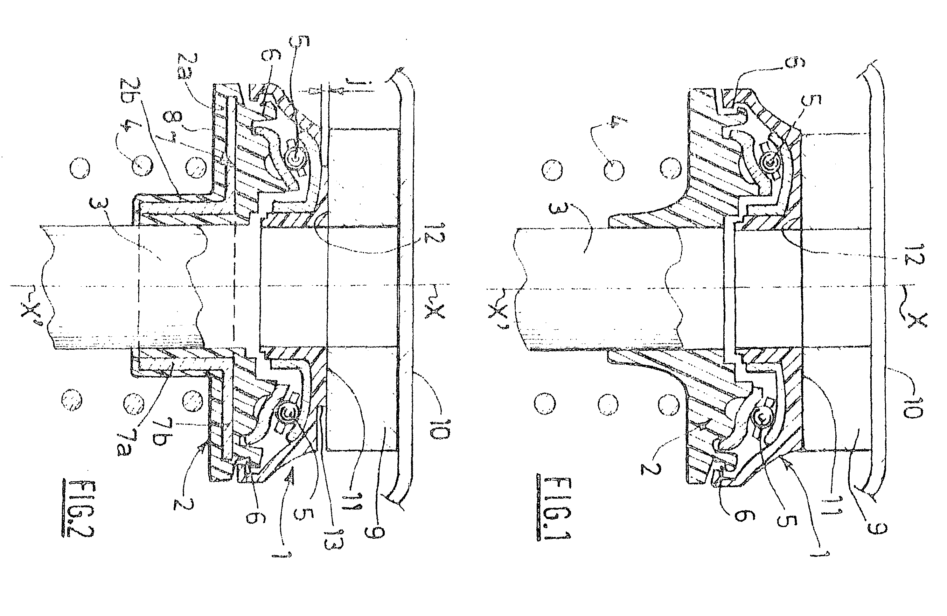

La butée tournante connue d'un train avant de véhicule automobile telle que représentée sur la figure 1 comprend un premier élément annulaire 1 fixe destiné à venir en appui contre une partie fixe appelée coupelle de la carrosserie du véhicule et un second élément annulaire 2 mobile en rotation autour d'un axe X-X' par rapport au premier élément 1.

Ce second élément 2 entoure et porte l'extrémité supérieure 3 d'une jambe de force du train avant et supporte l'effort exercé par un ressort de suspension 4 entourant la jambe de force.

Un roulement à billes 5 est intercalé entre les deux éléments annulaires 1, 2.

Ces deux éléments 1, 2 sont réalisés en matière plastique.

Dans l'exemple représenté, un bloc filtrant 9 en caoutchouc est intercalé entre l'élément annulaire 1 et la coupelle 10 de la carrosserie du véhicule.

Le roulement à billes 5 est protégé contre la corrosion et les intrusions d'eau, de boue, etc..., par des chicanes 6 prévues à la périphérie des deux éléments annulaires 1, 2.

Il a été constaté que les efforts exercés par le ressort 4 pouvaient déformer l'élément 2 en matière plastique et augmenter le jeu compris entre les éléments 1 et 2.

Cette augmentation du jeu a pour conséquence l'annulation de la protection assurée par les chicanes 6 à l'égard de la corrosion et de la performance du roulement 5.

Pour remédier à cet inconvénient, selon l'invention (voir figure 2), la surface 11 du premier élément annulaire 1 destinée à venir en appui contre le bloc filtrant 9 comporte un décrochement 13 pour définir un jeu j à la périphérie de la surface du premier élément et la surface adjacente 12 du bloc filtrant, contrairement au cas de la réalisation connue selon la figure 1, dans laquelle la totalité de la surface supérieure 11 de l'élément 1 est en contact avec la surface adjacente 12 du bloc filtrant 9.

Le décrochement 13 est annulaire et est centré sur l'axe de rotation X-X'.

On voit sur la figure 2 que le décrochement 13 est situé sensiblement au droit des billes 5 du roulement à billes inséré entre les éléments 1 et 2.

Le jeu défini par le décrochement 13 est de l'ordre de quelques millimètres.

Il doit être suffisant pour que la partie périphérique de l'élément 1, soit libre par rapport au bloc filtrant 9, non seulement au repos du véhicule, mais également lorsque celui-ci est en mouvement et que la suspension de ce dernier fonctionne et absorbe les inégalités de la chaussée.

Ainsi, la partie périphérique de l'élément 1 reste libre de tout contact avec le bloc filtrant 9 de sorte que les déformations subies par celui-ci sous l'effet des efforts exercés sur la jambe de force sont sans incidence à l'égard de la partie périphérique de l'élément annulaire 1, de sorte que celle-ci ne risque pas de se déformer.

Tous les efforts sont concentrés sur la partie centrale de l'élément annulaire 2 qui ne risque pas de se déformer, en raison de la présence du roulement à billes qui bloque en translation l'élément 1 par rapport à l'élément 2.

Dans l'exemple de réalisation représenté, le second élément annulaire 2 est renforcé en outre par un insert métallique 7 enrobé dans la matière plastique de ce second élément 2.

Comme montré par la figure 2, le second élément 2 comprend une première partie annulaire 2a s'étendant radialement autour de l'axe de rotation X-X' et comportant une face 8 supportant l'effort du ressort de suspension 4 et une seconde partie annulaire 2b s'étendant axialement dans une direction opposée au premier élément 1 et présentant un diamètre extérieur plus petit que celui de la première partie annulaire 2a s'étendant radialement.

L'insert métallique 7 comporte une partie en forme de bague 7a s'étendant dans la seconde partie annulaire 2b et une partie en forme de collerette 7b s'étendant dans la première partie annulaire 2a de l'élément 2.

La figure 2 montre d'autre part, que les deux parties 7a, 7b de l'insert métallique 7 sont réalisées d'une seule pièce et qu'elles ont sensiblement la même épaisseur.

Lesdits premier et second éléments de la butée tournante selon l'invention sont de préférence en polyamide et l'insert métallique 7 est en acier.

Le second élément ainsi renforcé par l'insert métallique est résistant aux déformations dues aux éventuels efforts exercés par le ressort de suspension, ce qui contribue à la protection du roulement à billes à l'égard de la corrosion et des intrusions.

## Revendications

1. Butée tournante d'un train avant de véhicule automobile comprenant un premier élément annulaire (1) fixe destiné à venir en appui contre un bloc filtrant (9) s'appuyant sous une partie fixe (10) de la carrosserie du véhicule et un second élément annulaire (2) mobile en rotation par rapport au premier élément (1), ce second élément (2) entourant et portant l'extrémité supérieure (3) d'une jambe de force du train avant et supportant l'effort exercé par un ressort de suspension (4) entourant la jambe de force, un roulement à billes (5) ou analogue étant intercalé entre les deux éléments annulaires (1, 2), ces deux éléments (1, 2) étant réalisés en matière plastique, **caractérisée en ce que** la surface (11) du premier élément annulaire (1) destinée à venir en appui contre le bloc filtrant (9) comporte un décrochement (13) pour définir un jeu (j) à la périphérie de ladite surface (11) du premier élément et la surface adjacente (12) du bloc filtrant.

2. Butée tournante selon la revendication 1, **caractérisée en ce que** ledit décrochement (13) est annulaire et est centré sur l'axe de rotation (X-X').

3. Butée tournante selon l'une des revendications 1 ou 2, **caractérisée en ce que** ledit décrochement (13) est situé sensiblement au droit des billes (5) dudit roulement à billes.

4. Butée tournante selon l'une des revendications 1 à 3, **caractérisée en ce que** le jeu (j) défini par ledit décrochement (13) est de l'ordre de quelques millimètres.

5. Butée tournante selon l'une des revendications 1 à 4, **caractérisée en ce que** lesdits éléments annulaires (1, 2) sont en polyamide.

6. Butée tournante selon l'une des revendications 1 à 5, **caractérisée en ce que** le bloc filtrant (9) est en élastomère.

7. Train avant de véhicule automobile comportant une butée avant selon l'une des revendications 1 à 6.

## Claims

1. Rotary thrust bearing for a motor vehicle front axle assembly comprising a first annular element (1) that is fixed and intended to bear against a filtering block (9) pressing against the underside of a fixed part (10) of the bodywork of the vehicle and a second annular element (2) that is able to rotate with respect to the first element (1), this second element (2) surrounding and bearing the upper end (3) of a strut of the front axle assembly and bearing the load applied by a suspension spring (4) surrounding the strut, a ball bearing (5) or the like being interposed between the two annular elements (1, 2), these two elements (1, 2) being made of plastic, **characterized in that that** surface (11) of the first annular element (1) that is intended to bear against the filtering block (9) has a cut-out (13) to define a clearance (j) between the periphery of the said surface (11) of the first element and the adjacent surface (12) of the filtering block.

2. Rotary thrust bearing according to Claim 1, **characterized in that** the said cut-out (13) is annular and is centred on the axis of rotation (X-X').

3. Rotary thrust bearing according to either of Claims 1 and 2, **characterized in that** the said cut-out (13) is situated substantially in line with the balls (5) of the said ball bearing.

4. Rotary thrust bearing according to one of Claims 1 to 3, **characterized in that** the clearance (j) defined by the said cut-out (13) is of the order of a few millimetres.

5. Rotary thrust bearing according to one of Claims 1 to 4, **characterized in that** the said annular elements (1, 2) are made of polyamide.

6. Rotary thrust bearing according to one of Claims 1 to 5, **characterized in that** the filtering block (9) is made of elastomer.

7. Motor vehicle front axle assembly comprising a front thrust bearing according to one of Claims 1 to 6.

## Patentansprüche

1. Drehlager einer Vorderachse eines Kraftfahrzeugs, das ein erstes ortsfestes ringförmiges Element (1), das dazu bestimmt ist, gegen einen Filterblock (9) in Auflage zu kommen, der unter einem ortsfesten Bereich (10) der Karosserie des Fahrzeugs aufliegt, und ein zweites, bezüglich des ersten Elements (1) drehbewegliches, ringförmiges Element (2) enthält, wobei dieses zweite Element (2) das obere Ende (3) eines Federbeins der Vorderachse umgibt und trägt und der von einer das Federbein umgebenden Tragfeder (4) ausgeübten Kraft standhält, wobei ein Kugellager (5) oder Ähnliches zwischen die zwei ringförmigen Elemente (1, 2) eingefügt ist, wobei diese zwei Elemente (1, 2) aus Kunststoff hergestellt sind, **dadurch gekennzeichnet, dass** die Fläche (11) des ersten ringförmigen Elements (1), die dazu bestimmt ist, gegen den Filterblock (9) in Auflage zu kommen, einen Absatz (13) aufweist, um ein Spiel (j) am Umfang der Fläche (11) des ersten Elements und der angrenzenden Fläche (12) des Filterblocks zu definieren.

2. Drehlager nach Anspruch 1, **dadurch gekennzeichnet, dass** der Absatz (13) ringförmig und auf die Drehachse (X-X') zentriert ist.

3. Drehlager nach einem der Ansprüche 1 oder 2, **dadurch gekennzeichnet, dass** der Absatz (13) sich im Wesentlichen im rechten Winkel vor den Kugeln (5) des Kugellagers befindet.

4. Drehlager nach einem der Ansprüche 1 bis 3, **dadurch gekennzeichnet, dass** das von dem Absatz (13) definierte Spiel (j) in der Größenordnung von einigen Millimetern liegt.

5. Drehlager nach einem der Ansprüche 1 bis 4, **dadurch gekennzeichnet, dass** die ringförmigen Elemente (1, 2) aus Polyamid sind.

6. Drehlager nach einem der Ansprüche 1 bis 5, **dadurch gekennzeichnet, dass** der Filterblock (9) aus Elastomermaterial ist.

7. Vorderachse eines Kraftfahrzeugs, die ein vorderes Drehlager nach einem der Ansprüche 1 bis 6 aufweist.
